# EUROPEAN PATENT APPLICATION

(11) **EP 4 741 189 A1**
(43) Date of publication of application: **13.05.2026**
(21) Application number: 24835150.4
(22) Date of filing: 20.05.2024
(51) Int. Cl.: B60H 1/32

(54) **THERMAL MANAGEMENT SYSTEM AND VEHICLE**

(30) Priority: 03.07.2023 CN 202310809208
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIAO, Xingdong, Ningbo, Zhejiang 315899 (CN); XIA, Songyong, Ningbo, Zhejiang 315899 (CN); WANG, Jian, Ningbo, Zhejiang 315899 (CN); SUN, Ligang, Ningbo, Zhejiang 315899 (CN); XING, Xiaodong, Ningbo, Zhejiang 315899 (CN)
(74) Representative: Michalski Hüttermann & Partner Patentanwälte mbB
(86) International application number: PCT/CN2024/094244
(87) International publication number: WO 2025/007665

(57) **Abstract**

A thermal management system (10) and a vehicle. The thermal management system comprises a refrigerant circuit (11). The refrigerant circuit comprises a refrigeration circuit (62). The refrigeration circuit comprises a compressor (12), a first water-cooled heat exchanger (13), an outdoor heat exchanger (14) and an indoor heat exchange assembly (15). An outlet (17) of the compressor is connected to an inlet (23) of the first water-cooled heat exchanger, an outlet (24) of the first water-cooled heat exchanger is connected to an inlet (19) of the outdoor heat exchanger, and an outlet (18) of the outdoor heat exchanger is connected to the indoor heat exchange assembly. The indoor heat exchange assembly is connected to an inlet (16) of the compressor, so as to output a refrigerant to the compressor.

## Description

### CROSS REFERENCE TO RELATED APPLICATIONS

This application claims priority to the Chinese patent application with application number 202310809208.7, submitted to the Chinese Patent Office on July 3, 2023, the entire contents of which are incorporated herein by reference.

### TECHNICAL FIELD

The embodiments of the present disclosure relate to but are not limited to the field of thermal management technology, and particularly relate to but are not limited to thermal management systems and vehicles.

### BACKGROUND

With the gradual development of technology, new energy vehicles have gradually come into people's vision. New energy vehicles use unconventional fuels as their power source. New energy vehicles usually have functions such as car cooling and heating.

### SUMMARY

The following is a summary of the subject matters described in detail in the present disclosure. This summary is not intended to limit the protection scope of the claims.

The present disclosure provides a thermal management system including a refrigerant circuit; where the refrigerant circuit includes a cooling circuit; the cooling circuit includes a compressor, a first water-cooling heat exchanger, an outdoor heat exchanger, and an indoor heat exchange assembly;
where an outlet of the compressor is connected to an inlet of the first water-cooling heat exchanger, an outlet of the first water-cooling heat exchanger is connected to an inlet of the outdoor heat exchanger, an outlet of the outdoor heat exchanger is connected to the indoor heat exchange assembly, and the indoor heat exchange assembly is connected to an inlet of the compressor to output refrigerant to the compressor.

In some embodiments, the indoor heat exchange assembly includes a first indoor heat exchanger and a second water-cooling heat exchanger; the outlet of the outdoor heat exchanger is connected to a first port of the first indoor heat exchanger and an inlet of the second water-cooling heat exchanger; a second port of the first indoor heat exchanger and an outlet of the second water-cooling heat exchanger are connected to the inlet of the compressor;
the refrigerant circuit includes a heating circuit and a switching assembly; the compressor, the first water-cooling heat exchanger, the switching assembly, the first indoor heat exchanger, and the second water-cooling heat exchanger are sequentially connected to form the heating circuit; the outlet of the compressor is connected to the inlet of the first water-cooling heat exchanger, the outlet of the first water-cooling heat exchanger is connected to the second port of the first indoor heat exchanger, the first port of the first indoor heat exchanger is connected to the inlet of the second water-cooling heat exchanger, and the outlet of the second water-cooling heat exchanger is connected to the inlet of the compressor; and
the outlet of the first water-cooling heat exchanger, the inlet of the outdoor heat exchanger, and the second port of the first indoor heat exchanger are connected to the switching assembly.

In some embodiments, the thermal management system further includes a first sub coolant circuit, a second sub coolant circuit, and a multi-way valve, where coolant in the first sub coolant circuit passes through the second water-cooling heat exchanger; the second sub coolant circuit includes a battery assembly, the first sub coolant circuit and the second sub coolant circuit are both connected to the multi-way valve, to enable the first sub coolant circuit and the second sub coolant circuit to be connected or disconnected by the multi-way valve.

In some embodiments, the thermal management system further includes a third sub coolant circuit, a fourth sub coolant circuit, and a multi-way valve, where the third sub coolant circuit includes a radiator, the fourth sub coolant circuit includes an electrical assembly, the third sub coolant circuit and the fourth sub coolant circuit are both connected to the multi-way valve, to enable the third sub coolant circuit and the fourth sub coolant circuit to be connected or disconnected by the multi-way valve.

In some embodiments, the thermal management system further includes a fifth sub coolant circuit, where coolant in the fifth sub coolant circuit passes through the first water-cooling heat exchanger; the fifth sub coolant circuit is connected to the multi-way valve, and the multi-way valve enables the fifth sub coolant circuit to be connected or disconnected with the third sub coolant circuit; and/or
the thermal management system further includes a first sub coolant circuit, where coolant in the first sub coolant circuit passes through the second water-cooling heat exchanger; the first sub coolant circuit is connected to the multi-way valve, to enable the first sub coolant circuit to be selectively connected to at least one of the third sub coolant circuit or the fourth sub coolant circuit by the multi-way valve.

In some embodiments, the indoor heat exchange assembly includes a second indoor heat exchanger, the outlet of the outdoor heat exchanger is connected to an inlet of the second indoor heat exchanger, an outlet of the second indoor heat exchanger is connected to the inlet of the compressor; where the first indoor heat exchanger is configured for heat exchange with air in a driver cabin of a vehicle, and the second indoor heat exchanger is configured for heat exchange with air in a passenger cabin of the vehicle.

In some embodiments, the indoor heat exchange assembly includes a first fan and an air heater, and the first fan, the second indoor heat exchanger, and the air heater are arranged side by side.

In some embodiments, the indoor heat exchange assembly includes a sixth control valve, the outlet of the outdoor heat exchanger is connected to one end of the sixth control valve, and the other end of the sixth control valve is connected to the inlet of the second indoor heat exchanger; when the sixth control valve is opened, the cooling circuit is formed in which the compressor, the first water-cooling heat exchanger, the outdoor heat exchanger, and the second indoor heat exchanger are sequentially connected.

In some embodiments, the thermal management system further includes a fifth sub coolant circuit, where the fifth sub coolant circuit includes a heater core, and coolant in the fifth sub coolant circuit passes through the first water-cooling heat exchanger;
the indoor heat exchange assembly includes a second fan, where the second fan, the first indoor heat exchanger, and the heater core are arranged side by side.

In some embodiments, the fifth sub coolant circuit includes a three-way valve, a coolant main circuit, and a coolant branch circuit; coolant in the coolant main circuit passes through the first water-cooling heat exchanger; the coolant branch circuit includes the heater core; an inlet of the three-way valve and a first outlet of the three-way valve are connected to the main coolant circuit, a second outlet of the three-way valve is connected to the coolant branch circuit, and the inlet of the three-way valve is connected to one of the first outlet of the three-way valve or the second outlet of the three-way valve; and/or the fifth sub coolant circuit includes a coolant heater for heating the coolant in the fifth sub coolant circuit.

In some embodiments, the indoor heat exchange assembly includes a third control valve, the second port of the first indoor heat exchanger is connected to one end of the third control valve, and the other end of the third control valve is connected to the inlet of the compressor; when the thermal management system is in a cooling mode, the third control valve is opened to form the cooling circuit; and when the thermal management system is in a heating mode, the third control valve is closed to form the heating circuit.

In some embodiments, the switching assembly includes a fourth control valve and a fifth control valve, where the outlet of the first water-cooling heat exchanger is connected to one end of the fourth control valve, and the other end of the fourth control valve is connected to the inlet of the outdoor heat exchanger; when the fourth control valve is opened, the cooling circuit is formed in which the compressor, the first water-cooling heat exchanger, the outdoor heat exchanger, and the indoor heat exchange assembly are sequentially connected; the outlet of the first water-cooling heat exchanger is further connected to one end of the fifth control valve, and the other end of the fifth control valve is connected to the second port of the first indoor heat exchanger; and when the fifth control valve is opened, the heating circuit is formed in which the compressor, the first water-cooling heat exchanger, the first indoor heat exchanger, and the second water-cooling heat exchanger are sequentially connected.

In some embodiments, the switching assembly includes a switching valve, and the outlet of the first water-cooling heat exchanger, the inlet of the outdoor heat exchanger, and the second port of the first indoor heat exchanger are connected to the switching valve; by controlling the switching of the switching valve, the outlet of the first water-cooling heat exchanger is enabled to be connected to one of the inlet of the outdoor heat exchanger or the second port of the first indoor heat exchanger.

The present disclosure provides a vehicle including the thermal management system as described in any one of the above embodiments.

The thermal management system provided in the present disclosure includes a refrigerant circuit. The refrigerant circuit includes a cooling circuit, and the cooling circuit includes a compressor, a first water-cooling heat exchanger, an outdoor heat exchanger, and an indoor heat exchange assembly. In the cooling circuit, the indoor heat exchange assembly is equivalent to an evaporator, which can be used to reduce the temperature of the air in the vehicle interior. The first water-cooling heat exchanger and the outdoor heat exchanger are equivalent to condensers. In this way, the first water-cooling heat exchanger and the outdoor heat exchanger can dissipate heat from the refrigerant, thereby increasing the heat exchange capacity, enabling faster cooling of the vehicle interior, and improving the user experience.

It is to be understood that the above general descriptions and the below detailed descriptions are merely exemplary and explanatory, and are not intended to limit the present disclosure. After reading and understanding the accompanying drawings and detailed description, other aspects can be understood.

### BRIEF DESCRIPTION OF DRAWINGS

The accompanying drawings, which are incorporated in and constitute a part of this specification, illustrate examples consistent with the present disclosure and, together with the description, serve to explain the principles of the present disclosure.
FIG. 1 is a schematic diagram of a thermal management system in a cooling mode according to an embodiment of the present disclosure.
FIG. 2 is a schematic diagram of a thermal management system in a heating mode according to an embodiment of the present disclosure.

### Reference signs:

10-Thermal management system, 11-Refrigerant circuit, 12-Compressor, 13-First water-cooling heat exchanger, 14-Outdoor heat exchanger, 15-Indoor heat exchanger assembly, 16-Compressor inlet, 17-Compressor outlet, 18-Outdoor heat exchanger outlet, 19-Outdoor heat exchanger inlet, 20-First Indoor heat exchanger, 21-First control valve, 22-First port, 23-First water-cooling heat exchanger inlet, 24-First water-cooling heat exchanger outlet, 25-Second control valve, 26-Second water-cooling heat exchanger, 27-Second port, 28-Second water-cooling heat exchanger inlet, 29-Second water-cooling heat exchanger outlet, 30-Third control valve, 31-Fourth control valve, 32-Fifth control valve, 33-First sub coolant circuit, 34-Second sub coolant circuit, 35-Multi-way valve, 36-Battery assembly, 37-Battery water pump, 38-Third sub coolant circuit, 39-Fourth sub coolant circuit, 40-Radiator, 41-Electrical assembly, 42-Heat dissipation water tank, 43-Heat dissipation fan, 44-Motor, 45-On-board power manager, 46-Front motor, 47-Rear motor, 48-Electrical water pump, 49-Fifth sub coolant circuit, 50-Heater water pump, 51-Heater core, 52-Second fan, 53-Coolant heater, 54-Three-way valve, 55-Main coolant circuit, 56-Coolant branch circuit, 57-Sixth control valve, 58-Second indoor heat exchanger, 60-Air heater, 61-Check valve, 62-Cooling circuit, 63-Heating circuit, 64-Switching assembly, 65-Second indoor heat exchanger inlet, 66-Second indoor heat exchanger outlet.

### DETAILED DESCRIPTION

Embodiments will be described in detail herein, examples of which are illustrated in the accompanying drawings. When the following descriptions involve the drawings, like numerals in different drawings represent like or similar elements unless stated otherwise. Embodiments described in the illustrative examples below are not intended to represent all embodiments consistent with the present disclosure. Rather, they are merely embodiments of devices and methods consistent with some aspects of the present disclosure as recited in the appended claims.

Terms used in the present disclosure is only for the purpose of describing particular embodiments and is not intended to limit the present disclosure. Unless otherwise defined, the technical terms or scientific terms used in the present disclosure shall have the ordinary meanings understood by those skilled in the art to which the present disclosure belongs. "First", "second" and similar words used in the present disclosure and claims do not indicate any sequence, quantity or importance, but are only used to distinguish different components. Likewise, words like "a" or "one" do not indicate a limitation of quantity, but mean that there is at least one. "Multiple", "a plurality of" or "several" means two or more. Unless otherwise indicated, terms such as "front", "rear", "lower" and/or "upper" are only used for convenience of description and are not intended to limit to a position or an orientation in space. "Includes", "comprises" and similar terms mean that the elements or items listed before "includes" or "comprises" include the elements or items listed after "includes" or "comprises" and their equivalents, and do not exclude other elements or objects. Words such as "connect" or "couple" are not limited to physical or mechanical connections, and can include electrical connections, whether direct or indirect.

Terms used in the present disclosure is only for the purpose of describing particular embodiments and is not intended to limit the present disclosure. As used in the present disclosure and the appended claims, the singular forms "a", "said" and "the" are intended to include the plural" and "the" are intended to include the plural forms as well, unless the context clearly dictates otherwise. It should further be understood that the term "and/or" as used herein refers to and includes any and all possible combinations of one or more of the associated listed items.

In some new energy vehicles, the air conditioning is less effective in high-temperature environments, resulting in a slower cooling rate inside the vehicle and a poor user experience. Therefore, the present disclosure provides a thermal management system and vehicle. The thermal management system and vehicle of the present disclosure will be described in detail below with reference to the accompanying drawings. Without conflict, features in following embodiments can be combined with each other.

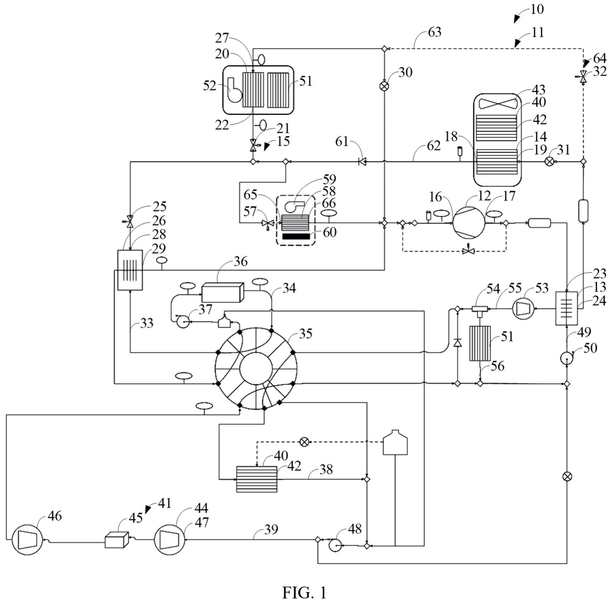

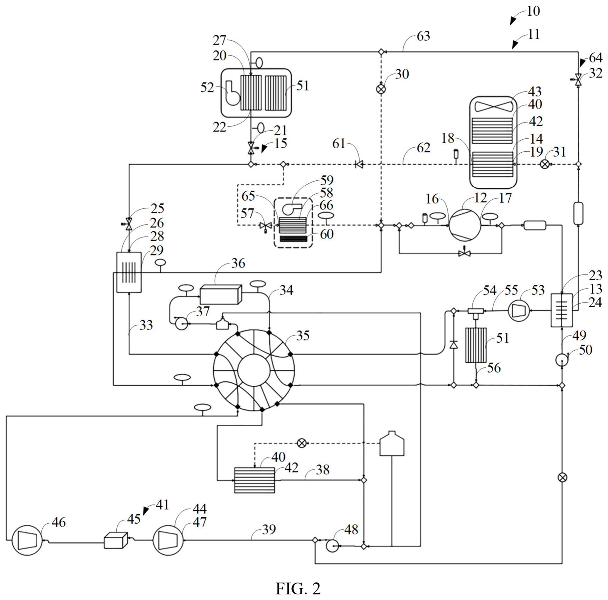

As shown in FIGs. 1 and 2, the present disclosure provides a thermal management system 10. The thermal management system 10 can be applied to vehicles. The thermal management system 10 includes a refrigerant circuit 11. The refrigerant circuit 11 includes a cooling circuit 62. The refrigerant can circulate in the cooling circuit 62, thereby achieving cooling of at least one of the air in the vehicle interior or the coolant in other coolant circuits in the thermal management system 10.

As shown in FIG. 1, the cooling circuit 62 includes a compressor 12, a first water-cooling heat exchanger 13, an outdoor heat exchanger 14, and an indoor heat exchange assembly 15. The refrigerant flowing through the indoor heat exchange assembly 15 can be used for heat exchange with the heat medium. Where the heat medium includes at least one of the coolant in other coolant circuits in the thermal management system 10 or the air in the vehicle interior.

The outlet 17 of the compressor 12 is connected to the inlet 23 of the first water-cooling heat exchanger 13, the outlet 24 of the first water-cooling heat exchanger 13 is connected to the inlet 19 of the outdoor heat exchanger 14, the outlet 18 of the outdoor heat exchanger 14 is connected to the indoor heat exchange assembly 15, and the indoor heat exchange assembly 15 is connected to the inlet 16 of the compressor 12, for outputting the refrigerant circulating in the cooling circuit 62 to the compressor 12. It can be understood that refrigerant can flow through the above-mentioned structure including the inlet and outlet via the above-mentioned inlet and outlet. For example, the refrigerant can flow through the first water-cooling heat exchanger 13 via the inlet 23 and outlet 24 of the first water-cooling heat exchanger 13.

In the cooling circuit 62, the refrigerant in the cooling circuit 62 can flow through the compressor 12, the first water-cooling heat exchanger 13, the outdoor heat exchanger 14, and the indoor heat exchange assembly 15 in sequence. The first water-cooling heat exchanger 13 and the outdoor heat exchanger 14 are equivalent to condensers, and the indoor heat exchange assembly 15 is equivalent to an evaporator. In this way, the indoor heat exchange assembly 15 can be used to achieve cooling of the heat medium. For example, the indoor heat exchange assembly 15 can be used to achieve cooling of the coolant in other coolant circuits in the thermal management system 10, or achieve cooling of the air in the vehicle interior. The indoor heat exchange assembly 15 is equivalent to an evaporator, which can be used to reduce the temperature of the air in the vehicle interior. The first water-cooling heat exchanger 13 and the outdoor heat exchanger 14 are equivalent to condensers. In this way, the first water-cooling heat exchanger 13 and the outdoor heat exchanger 14 can dissipate heat from the refrigerant circulating in the cooling circuit 62, thereby increasing the heat exchange capacity, enabling faster cooling of the vehicle interior, and improving the user experience.

In some embodiments, the indoor heat exchange assembly 15 includes a first indoor heat exchanger 20 and a second water-cooling heat exchanger 26. The first indoor heat exchanger 20 includes a first port 22 and a second port 27. The outlet 18 of the outdoor heat exchanger 14 is connected to the first port 22 of the first indoor heat exchanger 20 and the inlet 28 of the second water-cooling heat exchanger 26. The second port 27 of the first indoor heat exchanger 20 and the outlet 29 of the second water-cooling heat exchanger 26 are connected to the inlet 16 of the compressor 12.

In this embodiment, the indoor heat exchange assembly 15 includes a first control valve 21 and a second control valve 25. Where the first control valve 21 and the second control valve 25 may be expansion valves. The circulation or cutoff of refrigerant circulating in the cooling circuit 62 can be achieved by opening or closing the first control valve 21 and the second control valve 25. The flow rate of the refrigerant passing through the first control valve 21 and the second control valve 25 can also be adjusted by regulating the opening degrees of the first control valve 21 and the second control valve 25.

The outlet 24 of the first water-cooling heat exchanger 13 is connected to the inlet 19 of the outdoor heat exchanger 14, the outlet 18 of the outdoor heat exchanger 14 is connected to one end of the first control valve 21, the other end of the first control valve 21 is connected to the first port 22 of the first indoor heat exchanger 20, and the second port 27 of the first indoor heat exchanger 20 is connected to the inlet 16 of the compressor 12. In this way, when the first control valve 21 is opened, the refrigerant can flow through the first indoor heat exchanger 20 to achieve heat exchange between the circulating refrigerant in the cooling circuit 62 and the air in the vehicle interior, thereby reducing the temperature of the vehicle interior.

The outlet 18 of the outdoor heat exchanger 14 is connected to one end of the second control valve 25, and the other end of the second control valve 25 is connected to the inlet 28 of the second water-cooling heat exchanger 26. The outlet 29 of the second water-cooling heat exchanger 26 is connected to the inlet 16 of the compressor 12. When the second control valve 25 is opened, the refrigerant circulating in the cooling circuit 62 can flow through the second water-cooling heat exchanger 26, thereby achieving heat exchange between the refrigerant and the coolant in other coolant circuits in the thermal management system 10, thereby reducing the temperature of the coolant.

As shown in FIG. 2, the refrigerant circuit 11 includes a heating circuit 63 and a switching assembly 64. Heating circuit 63 includes compressor 12, first water-cooling heat exchanger 13, first indoor heat exchanger 20, and second water-cooling heat exchanger 26. The outlet 17 of compressor 12 is connected to the inlet 23 of the first water-cooling heat exchanger 13, the outlet 24 of the first water-cooling heat exchanger 13 is connected to the second port 27 of the first indoor heat exchanger 20, the first port 22 of the first indoor heat exchanger 20 is connected to the inlet 28 of the second water-cooling heat exchanger 26, and the outlet 29 of the second water-cooling heat exchanger 26 is connected to the inlet 16 of compressor 12.

In the heating circuit 63, the refrigerant can flow through the compressor 12, the first water-cooling heat exchanger 13, the first indoor heat exchanger 20, and the second water-cooling heat exchanger 26 in sequence. The first water-cooling heat exchanger 13 and the first indoor heat exchanger 20 are equivalent to condensers, and the second water-cooling heat exchanger 26 is equivalent to an evaporator. In this way, the first indoor heat exchanger 20 can be used to achieve heat exchange between the refrigerant in the heating circuit 63 and the air in the vehicle interior, thereby increasing the temperature of the vehicle interior. The first indoor heat exchanger 20 can be used to preheat the air in the vehicle interior. The second water-cooling heat exchanger 26 can be used to achieve heat exchange between the refrigerant and the coolant in other coolant circuits in the thermal management system 10, thereby reducing the temperature of the coolant.

In this embodiment, the indoor heat exchange assembly 15 includes a third control valve 30. The second port 27 of the first indoor heat exchanger 20 is connected to one end of the third control valve 30, and the other end of the third control valve 30 is connected to the inlet 16 of the compressor 12. The connection or disconnection between the second port 27 of the first indoor heat exchanger 20 and the inlet 16 of the compressor 12 can be achieved by opening or closing the third control valve 30. Where the third control valve 30 can be an electromagnetic valve. In this way, during the circulation of refrigerant in the cooling circuit 62, the refrigerant can directly flow into the inlet 16 of the compressor 12. When the thermal management system 10 is in a cooling mode, the third control valve 30 can be opened to form the cooling circuit 62. When the thermal management system 10 is in a heating mode, the third control valve 30 can be closed to form the heating circuit 63.

In some embodiments, the outlet 18 of the outdoor heat exchanger 14 is connected to one end of the check valve 61, and the other end of the check valve 61 is connected to the first port 22 of the first indoor heat exchanger 20. The check valve 61 is unidirectionally conductive from one end to the other, such that the outlet 18 of the outdoor heat exchanger 14 is unidirectionally conductive to the first port 22 of the first indoor heat exchanger 20. This can prevent refrigerant from flowing back into the outdoor heat exchanger 14 in the heating circuit 63.

As shown in FIG. 1, when the thermal management system 10 is in the cooling mode, the refrigerant can flow through the compressor 12, the first water-cooling heat exchanger 13, the outdoor heat exchanger 14, and the indoor heat exchange assembly 15 in sequence. The first water-cooling heat exchanger 13 and the outdoor heat exchanger 14 are equivalent to condensers, and the indoor heat exchange assembly 15 is equivalent to an evaporator. In this way, the indoor heat exchange assembly 15 can be used to achieve cooling of the heat medium. For example, the indoor heat exchange assembly 15 can be used to achieve cooling of the coolant in other coolant circuits in the thermal management system 10, or achieve cooling of the air in the vehicle interior.

As shown in FIG. 2, when the thermal management system 10 is in the heating mode, the refrigerant in the heating circuit 63 can flow through the compressor 12, the first water-cooling heat exchanger 13, the first indoor heat exchanger 20, and the second water-cooling heat exchanger 26 in sequence. The first water-cooling heat exchanger 13 and the first indoor heat exchanger 20 are equivalent to condensers, and the second water-cooling heat exchanger 26 is equivalent to an evaporator. In this way, the first indoor heat exchanger 20 can be used to achieve heat exchange between the refrigerant in the heating circuit 63 and the air in the vehicle interior, thereby increasing the temperature in the vehicle interior.

In this way, the first indoor heat exchanger 20 can act as an evaporator when the thermal management system 10 is in the cooling mode; and when the thermal management system 10 is in the heating mode, the first indoor heat exchanger 20 can act as a condenser. In this way, the temperature of the air in the vehicle interior can be increased or decreased using only the first indoor heat exchanger 20, thereby making full use of the first indoor heat exchanger 20.

The outlet 24 of the first water-cooling heat exchanger 13, the inlet 19 of the outdoor heat exchanger 14, and the second port 27 of the first indoor heat exchanger 20 are connected to the switching assembly 64. In this way, the outlet 24 of the first water-cooling heat exchanger 13 can be connected with one of the inlet 19 of the outdoor heat exchanger 14 or the second port 27. Where the switching assembly 64 may include a fourth control valve 31 and a fifth control valve 32. The switching assembly 64 may further include a switching valve.

In this embodiment, the outlet 24 of the first water-cooling heat exchanger 13 is connected to one end of the fourth control valve 31, and the other end of the fourth control valve 31 is connected to the inlet 19 of the outdoor heat exchanger 14. By opening or closing the fourth control valve 31, the connection or disconnection between the outlet 24 of the first water-cooling heat exchanger 13 and the inlet 19 of the outdoor heat exchanger 14 can be achieved. If the fourth control valve 31 is opened, a cooling circuit 62 is formed, and the refrigerant can flow through the compressor 12, the first water-cooling heat exchanger 13, the outdoor heat exchanger 14, and the indoor heat exchange assembly 15 in sequence. The refrigerant can circulate in the cooling circuit 62.

The outlet 24 of the first water-cooling heat exchanger 13 is further connected to one end of the fifth control valve 32, and the other end of the fifth control valve 32 is connected to the second port 27 of the first indoor heat exchanger 20. By opening or closing the fifth control valve 32, the connection or disconnection between the outlet 24 of the first water-cooling heat exchanger 13 and the second port 27 of the first indoor heat exchanger 20 can be achieved. Where the fourth control valve 31 can be an electromagnetic valve, and the fifth control valve 32 can be an expansion valve. If the fifth control valve 32 is opened, a heating circuit 63 is formed, and the refrigerant can flow through the compressor 12, the first water-cooling heat exchanger 13, the first indoor heat exchanger 20, and the second water-cooling heat exchanger 26 in sequence. The refrigerant can circulate in the heating circuit 63.

In other embodiments, the outlet 24 of the first water-cooling heat exchanger 13, the inlet 19 of the outdoor heat exchanger 14, and the second port 27 of the first indoor heat exchanger 20 are connected to a switching valve. By controlling the switching of the switching valve, the outlet 24 of the first water-cooling heat exchanger 13 can be connected to one of the inlet 19 of the outdoor heat exchanger 14 or the second port 27, thereby achieving the switching between the cooling circuit 62 and the heating circuit 63.

As shown in FIG. 1, in some embodiments, the indoor heat exchange assembly 15 includes a second indoor heat exchanger 58. The outlet 18 of the outdoor heat exchanger 14 is connected to the inlet 65 of the second indoor heat exchanger 58. The outlet 66 of the second indoor heat exchanger 58 is connected to the inlet 16 of the compressor 12.

In this embodiment, the indoor heat exchange assembly 15 includes a sixth control valve 57. The outlet 18 of the outdoor heat exchanger 14 is connected to one end of the sixth control valve 57, and the other end of the sixth control valve 57 is connected to the inlet 65 of the second indoor heat exchanger 58. Where the sixth control valve 57 can be an expansion valve. If the sixth control valve 57 is opened, the refrigerant can circulate in the cooling circuit 62. The refrigerant can flow through the compressor 12, the first water-cooling heat exchanger 13, the outdoor heat exchanger 14, and the second indoor heat exchanger 58 in sequence. In this way, the second indoor heat exchanger 58 acts as an evaporator, which can reduce the temperature of the air in the vehicle.

Where the first indoor heat exchanger 20 is used for heat exchange with the air in the driver cabin, and the second indoor heat exchanger 58 is used for heat exchange with the air in the passenger cabin. In this way, the first indoor heat exchanger 20 can be used to achieve heat exchange of the air in the front row of the vehicle, and the second indoor heat exchanger 58 can be used to achieve heat exchange of the air in the rear row of the vehicle. By using the first indoor heat exchanger 20 and the second indoor heat exchanger 58, the first indoor heat exchanger 20 and the second indoor heat exchanger 58 can simultaneously evaporate and absorb heat when the thermal management system 10 is in air conditioning cooling mode, which can provide greater cooling capacity for the thermal management system 10, resulting in a faster decrease in indoor air temperature and improving user comfort.

In some embodiments, the indoor heat exchange assembly 15 includes a first fan 59 and an air heater 60. Where the first fan 59 can be a blower, and the air heater 60 can be a PTC heater (Positive Temperature Coefficient Heater). The first fan 59, the second indoor heat exchanger 58, and the air heater 60 are arranged side by side. The air blown out by the first fan 59 can be heated at the air heater 60, thereby increasing the temperature of the indoor air in the vehicle.

As shown in FIGs. 1 and 2, in some embodiments, the thermal management system 10 includes a first sub coolant circuit 33, a second sub coolant circuit 34, and a multi-way valve 35. Where the multi-way valve 35 can be, but is not limited to, a nine-way valve. The coolant in the first sub coolant circuit 33 passes through the second water-cooling heat exchanger 26. When the second control valve 25 is opened, the coolant in the first sub coolant circuit 33 and the refrigerant in the refrigerant circuit 11 can exchange heat at the second water-cooling heat exchanger 26.

The second sub coolant circuit 34 includes a battery assembly 36. The battery assembly 36 can be used to power vehicles. The first sub coolant circuit 33 and the second sub coolant circuit 34 are connected to a multi-way valve 35. The multi-way valve 35 allows the first sub coolant circuit 33 and the second sub coolant circuit 34 to be connected or disconnected. By switching the multi-way valve 35, the first sub coolant circuit 33 and the second sub coolant circuit 34 can be connected or disconnected. When the first sub coolant circuit 33 and the second sub coolant circuit 34 are connected, the coolant can flow in the first sub coolant circuit 33 and the second sub coolant circuit 34. In this way, the refrigerant in the refrigerant circuit 11 can be used to cool down the coolant flowing in the first sub coolant circuit 33 and second sub coolant circuit 34, thereby achieving cooling of the battery assembly 36. The cooling effect of the battery assembly 36 is good and the energy in the refrigerant circuit 11 is effectively utilized.

In some embodiments, the second sub coolant circuit 34 further includes a battery water pump 37, where the battery water pump 37 is connected to the battery assembly 36 for providing coolant to the battery assembly 36.

In some embodiments, the thermal management system 10 includes a third sub coolant circuit 38 and a fourth sub coolant circuit 39. The third sub coolant circuit 38 includes a radiator 40. In some embodiments, the radiator 40 may include a heat dissipation water tank 42 and a heat dissipation fan 43, with the heat dissipation fan 43 facing the heat dissipation water tank 42. The coolant in the third sub coolant circuit 38 passes through the heat dissipation water tank 42. In this way, heat exchange between the coolant and air can be achieved through radiator 40, thereby reducing the temperature of the coolant. The fourth sub coolant circuit 39 includes an electrical assembly 41. The electrical assembly 41 can include, but is not limited to, a motor 44 and an on-board power manager 45. The motor 44 may include a front motor 46 and a rear motor 47. The third sub coolant circuit 38 and the fourth sub coolant circuit 39 are connected to the multi-way valve 35. The third sub coolant circuit 38 and the fourth sub coolant circuit 39 can be connected or disconnected by the multi-way valve 35. When the third sub coolant circuit 38 is connected to the fourth sub coolant circuit 39, the coolant can flow through both the third sub coolant circuit 38 and the fourth sub coolant circuit 39. In this way, the radiator 40 can be used to cool down the electrical assembly 41, and the cooling effect of electrical assembly 41 is good.

In some embodiments, the heat dissipation fan 43, the heat dissipation water tank 42, and the outdoor heat exchanger 14 are arranged side by side. In this way, the heat dissipation fan 43 of the radiator 40 can be used to achieve heat exchange between the refrigerant in the refrigerant circuit 11 and the air, making the structure of the thermal management system more compact and concise.

In some embodiments, the thermal management system 10 further includes an electrical water pump 48. The electrical water pump 48 is connected to the electrical assembly 41 for providing coolant to the electrical assembly 41.

In some embodiments, the thermal management system 10 includes a fifth sub coolant circuit 49, and the coolant in the fifth sub coolant circuit 49 passes through the first water-cooling heat exchanger 13. In this way, the coolant in the fifth sub coolant circuit 49 and the refrigerant in the refrigerant circuit 11 can exchange heat at the first water-cooling heat exchanger 13. The fifth sub coolant circuit 49 is connected to the multi-way valve 35, and the fifth sub coolant circuit 49 and the third sub coolant circuit 38 can be connected or disconnected by the multi-way valve 35. When the fifth sub coolant circuit 49 is connected to the third sub coolant circuit 38, the coolant can flow in both the fifth sub coolant circuit 49 and the third sub coolant circuit 38. In this way, the radiator 40 can be used to cool the coolant passing through the first water-cooling heat exchanger 13, improving the heat transfer efficiency of the first water-cooling heat exchanger 13.

In some embodiments, the fifth sub coolant circuit 49 includes a heater water pump 50. The heater water pump 50 is connected to the first water-cooling heat exchanger 13 for providing coolant to the first water-cooling heat exchanger 13.

In some embodiments, the first sub coolant circuit 33 can optionally be connected to at least one of the third sub coolant circuit 38 or the fourth sub coolant circuit 39. The first sub coolant circuit 33 can be connected to the third sub coolant circuit 38, such that the coolant passing through the radiator 40 can pass through the second water-cooling heat exchanger 26. The radiator 40 can release heat to the environment, thereby accelerating the heating rate of the indoor air in the vehicle. The first sub coolant circuit 33 can be connected to the fourth sub coolant circuit 39, such that the coolant passing through the electrical assembly 41 can pass through the second water-cooling heat exchanger 26, thereby increasing the heating rate of the indoor air in the vehicle. Similarly, the first sub coolant circuit 33 can be connected to both the third sub coolant circuit 38 and the fourth sub coolant circuit 39.

In some embodiments, the fifth sub coolant circuit 49 includes a heater core 51. In this way, the coolant passing through the first water-cooling heat exchanger 13 can pass through the heater core 51. The coolant in the fifth sub coolant circuit 49 and the refrigerant in the refrigerant circuit 11 can exchange heat at the first water-cooling heat exchanger 13 to heat the coolant in the fifth sub coolant circuit 49, thereby heating the heater core 51. The indoor heat exchange assembly 15 includes a second fan 52. Where the second fan 52 can be a blower. The second fan 52, the first indoor heat exchanger 20, and the heater core 51 are arranged side by side. The air blown out by the second fan 52 can be heated at the heater core 51, thereby increasing the temperature of the indoor air of the vehicle.

In the heating circuit 63, when the outlet 24 of the first water-cooling heat exchanger 13 is connected to the second port 27 of the first indoor heat exchanger 20, the first indoor heat exchanger 20 acts as a condenser and can be used to increase the temperature of the indoor air of the vehicle. In this way, the heater core 51 can heat the indoor air of the vehicle together with the first indoor heat exchanger 20. The indoor air of the vehicle can be preheated through the first indoor heat exchanger 20, and then reheated again through the heater core 51, such that the temperature rise rate of the indoor air of the vehicle can be faster.

In some embodiments, the fifth sub coolant circuit 49 includes a coolant heater 53. The coolant heater 53 can be a high-pressure coolant heater. The coolant heater 53 is used to heat the coolant in the fifth sub coolant circuit 49. Thus, the heating core 51 can be heated, and the heating rate of the heating core 51 can be faster.

In some embodiments, the fifth sub coolant circuit 49 includes a three-way valve 54, a coolant main circuit 55, and a coolant branch circuit 56. The coolant in the coolant main circuit 55 passes through the first water-cooling heat exchanger 13. The coolant branch 56 includes a heater core 51. The inlet of three-way valve 54 and the first outlet of three-way valve 54 are connected to the coolant main circuit 55, and the second outlet of three-way valve 54 is connected to the coolant branch circuit 56. The inlet of three-way valve 54 is connected to one of the first outlet of three-way valve 54 or the second outlet of three-way valve 54. When the inlet of the three-way valve 54 is connected to the first outlet of the three-way valve 54, the coolant flows in the coolant main path 55 without passing through the heater core 51. When the inlet of the three-way valve 54 is connected to the second outlet of the three-way valve 54, the coolant can pass through the heater core 51. In this way, when the indoor temperature of the vehicle is low, the coolant can flow through the heater core 51 to assist in heating the air in the vehicle interior; alternatively, when the indoor temperature is appropriate, the coolant does not flow through the heater core 51 and only use the first indoor heat exchanger 20 to heat the air in the vehicle interior, which improves the adaptability of the thermal management system 10.

The embodiments of the present disclosure also provide a vehicle that can be used for carrying passengers and/or things. Where the vehicle can be a new energy vehicle. The vehicle includes the thermal management system. It should be noted that the above embodiments and the description of the thermal management system in the embodiments also apply to the vehicle of the present disclosure.

After considering and practicing the disclosure of the specification, other embodiments of the present disclosure will be readily apparent to those skilled in the art. The present disclosure is intended to cover any modification, use or adaptation of the present disclosure. These modifications, uses or adaptations follow the general principles of the present disclosure and include common knowledge and conventional technical means in the technical field that are not disclosed in the present disclosure. The specification and embodiments herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of the present disclosure is limited only by the attached claims.

## Claims

1. A thermal management system (10), comprising a refrigerant circuit (11);
wherein the refrigerant circuit (11) comprises a cooling circuit (62);
wherein the cooling circuit (62) comprises a compressor (12), a first water-cooling heat exchanger (13), an outdoor heat exchanger (14), and an indoor heat exchange assembly (15);
wherein an outlet (17) of the compressor (12) is connected to an inlet (23) of the first water-cooling heat exchanger (13),
an outlet (24) of the first water-cooling heat exchanger (13) is connected to an inlet (19) of the outdoor heat exchanger (14),
an outlet (18) of the outdoor heat exchanger (14) is connected to the indoor heat exchange assembly (15), and
the indoor heat exchange assembly (15) is connected to an inlet (16) of the compressor (12) to output refrigerant to the compressor (12).

2. The thermal management system (10) according to claim 1, wherein
the indoor heat exchange assembly (15) comprises a first indoor heat exchanger (20) and a second water-cooling heat exchanger (26);
the outlet (18) of the outdoor heat exchanger (14) is connected to a first port (22) of the first indoor heat exchanger (20) and an inlet (28) of the second water-cooling heat exchanger (26);
a second port (27) of the first indoor heat exchanger (20) and an outlet (29) of the second water-cooling heat exchanger (26) are connected to the inlet (16) of the compressor (12);
the refrigerant circuit (11) comprises a heating circuit (63) and a switching assembly (64);
the compressor (12), the first water-cooling heat exchanger (13), the switching assembly (64), the first indoor heat exchanger (20), and the second water-cooling heat exchanger (26) are sequentially connected to form the heating circuit (63);
the outlet (17) of the compressor (12) is connected to the inlet (23) of the first water-cooling heat exchanger (13), the outlet (24) of the first water-cooling heat exchanger (13) is connected to the second port (27) of the first indoor heat exchanger (20), the first port (22) of the first indoor heat exchanger (20) is connected to the inlet (28) of the second water-cooling heat exchanger (26), and the outlet (29) of the second water-cooling heat exchanger (26) is connected to the inlet (16) of the compressor (12); and
the outlet (24) of the first water-cooling heat exchanger (13), the inlet (19) of the outdoor heat exchanger (14), and the second port (27) of the first indoor heat exchanger (20) are connected to the switching assembly (64).

3. The thermal management system (10) according to claim 2, further comprising a first sub coolant circuit (33), a second sub coolant circuit (34), and a multi-way valve (35),
wherein coolant in the first sub coolant circuit (33) passes through the second water-cooling heat exchanger (26);
the second sub coolant circuit (34) comprises a battery assembly (36),
the first sub coolant circuit (33) and the second sub coolant circuit (34) are both connected to the multi-way valve (35), to enable the first sub coolant circuit (33) and the second sub coolant circuit (34) to be connected or disconnected by the multi-way valve (35).

4. The thermal management system (10) according to claim 2, further comprising a third sub coolant circuit (38), a fourth sub coolant circuit (39), and a multi-way valve (35),
wherein the third sub coolant circuit (38) comprises a radiator (40),
the fourth sub coolant circuit (39) comprises an electrical assembly (41),
the third sub coolant circuit (38) and the fourth sub coolant circuit (39) are both connected to the multi-way valve (35), to enable the third sub coolant circuit (38) and the fourth sub coolant circuit (39) to be connected or disconnected by the multi-way valve (35).

5. The thermal management system (10) according to claim 4, further comprising a fifth sub coolant circuit (49), wherein coolant in the fifth sub coolant circuit (49) passes through the first water-cooling heat exchanger (13);
the fifth sub coolant circuit (49) is connected to the multi-way valve (35), and the multi-way valve (35) enables the fifth sub coolant circuit (49) to be connected or disconnected with the third sub coolant circuit (38).

6. The thermal management system (10) according to claim 4 or 5, further comprising a first sub coolant circuit (33), wherein coolant in the first sub coolant circuit (33) passes through the second water-cooling heat exchanger (26);
the first sub coolant circuit (33) is connected to the multi-way valve (35), to enable the first sub coolant circuit (33) to be selectively connected to at least one of the third sub coolant circuit (38) or the fourth sub coolant circuit (39) by the multi-way valve (35).

7. The thermal management system (10) according to claim 2, wherein the indoor heat exchange assembly (15) comprises a second indoor heat exchanger (58),
the outlet (18) of the outdoor heat exchanger (14) is connected to an inlet (65) of the second indoor heat exchanger (58),
an outlet (66) of the second indoor heat exchanger (58) is connected to the inlet (16) of the compressor (12);
wherein the first indoor heat exchanger (20) is configured for heat exchange with air in a driver cabin of a vehicle, and the second indoor heat exchanger (58) is configured for heat exchange with air in a passenger cabin of the vehicle.

8. The thermal management system (10) according to claim 7, wherein the indoor heat exchange assembly (15) comprises a first fan (59) and an air heater (60), and the first fan (59), the second indoor heat exchanger (58), and the air heater (60) are arranged side by side.

9. The thermal management system (10) according to claim 7, wherein the indoor heat exchange assembly (15) comprises a sixth control valve (57), the outlet (18) of the outdoor heat exchanger (14) is connected to one end of the sixth control valve (57), and the other end of the sixth control valve (57) is connected to the inlet (65) of the second indoor heat exchanger (58);
when the sixth control valve (57) is opened, the cooling circuit (62) is formed in which the compressor (12), the first water-cooling heat exchanger (13), the outdoor heat exchanger (14), and the second indoor heat exchanger (58) are sequentially connected.

10. The thermal management system (10) according to claim 2, further comprising a fifth sub coolant circuit (49), wherein the fifth sub coolant circuit (49) comprises a heater core (51), and coolant in the fifth sub coolant circuit (49) passes through the first water-cooling heat exchanger (13);
the indoor heat exchange assembly (15) comprises a second fan (52), wherein the second fan (52), the first indoor heat exchanger (20), and the heater core (51) are arranged side by side.

11. The thermal management system (10) according to claim 10, wherein the fifth sub coolant circuit (49) comprises a three-way valve (54), a coolant main circuit (55), and a coolant branch circuit (56); coolant in the coolant main circuit (55) passes through the first water-cooling heat exchanger (13); the coolant branch circuit (56) comprises the heater core (51); an inlet of the three-way valve (54) and a first outlet of the three-way valve (54) are connected to the main coolant circuit (55), a second outlet of the three-way valve (54) is connected to the coolant branch circuit (56), and the inlet of the three-way valve (54) is connected to one of the first outlet of the three-way valve (54) or the second outlet of the three-way valve (54); and/or
the fifth sub coolant circuit (49) comprises a coolant heater (53) for heating the coolant in the fifth sub coolant circuit (49).

12. The thermal management system (10) according to claim 2, wherein the indoor heat exchange assembly (15) comprises a third control valve (30), the second port (27) of the first indoor heat exchanger (20) is connected to one end of the third control valve (30), and the other end of the third control valve (30) is connected to the inlet (16) of the compressor (12);
when the thermal management system (10) is in a cooling mode, the third control valve (30) is opened to form the cooling circuit (62); and
when the thermal management system (10) is in a heating mode, the third control valve (30) is closed to form the heating circuit (63).

13. The thermal management system (10) according to claim 2, wherein the switching assembly (64) comprises a fourth control valve (31) and a fifth control valve (32),
wherein the outlet (24) of the first water-cooling heat exchanger (13) is connected to one end of the fourth control valve (31), and the other end of the fourth control valve (31) is connected to the inlet (19) of the outdoor heat exchanger (14);
when the fourth control valve (31) is opened, the cooling circuit (62) is formed in which the compressor (12), the first water-cooling heat exchanger (13), the outdoor heat exchanger (14), and the indoor heat exchange assembly (15) are sequentially connected;
the outlet (24) of the first water-cooling heat exchanger (13) is further connected to one end of the fifth control valve (32), and the other end of the fifth control valve (32) is connected to the second port (27) of the first indoor heat exchanger (20); and
when the fifth control valve (32) is opened, the heating circuit (63) is formed in which the compressor (12), the first water-cooling heat exchanger (13), the first indoor heat exchanger (20), and the second water-cooling heat exchanger (26) are sequentially connected.

14. The thermal management system (10) according to claim 2, wherein the switching assembly (64) comprises a switching valve, and the outlet (24) of the first water-cooling heat exchanger (13), the inlet (19) of the outdoor heat exchanger (14), and the second port (27) of the first indoor heat exchanger (20) are connected to the switching valve;
by controlling switching of the switching valve, the outlet (24) of the first water-cooling heat exchanger (13) is enabled to be connected to one of the inlet (19) of the outdoor heat exchanger (14) or the second port (27) of the first indoor heat exchanger (20).

15. A vehicle comprising the thermal management system (10) according to any one of claims 1-14.
